# EUROPÄISCHE PATENTSCHRIFT

(11) **EP 1 543 201 B1**
(45) Veröffentlichungstag und Bekanntmachung des Hinweises auf die Patenterteilung: **08.02.2006**
(21) Anmeldenummer: 03753452.6
(22) Anmeldetag: 24.09.2003
(51) Int. Cl.: E03F 7/10, B01D 17/00, B60P 3/22, C02F 9/00

(54) **VERFAHREN UND VORRICHTUNG ZUR ABSCHEIDER-REINIGUNG**
METHOD AND DEVICE FOR CLEANING SEPARATORS
PROCEDE ET DISPOSITIF DE NETTOYAGE DE PURIFICATEUR

(30) Priorität: 24.09.2002 DE 10244415
(43) Veröffentlichungstag der Anmeldung: 22.06.2005
(73) Patentinhaber: Dorka, Jörg, 25980 Sylt-Ost (DE); Dorka, Thomas, 88079 Kressbronn (DE)
(72) Erfinder: Dorka, Jörg, 25980 Sylt-Ost (DE); Dorka, Thomas, 88079 Kressbronn (DE)
(74) Vertreter: Zeitler, Giselher
(86) Internationale Anmeldenummer: PCT/EP2003/010642
(87) Internationale Veröffentlichungsnummer: WO 2004/029377

(56) Entgegenhaltungen:
- DE-A- 2 656 299
- DE-A- 19 733 449

## Beschreibung

Die Erfindung betrifft ein Verfahren zur Reinigung von Öl- oder Benzinabscheidern gemäß dem Oberbegriff des Anspruchs 1 sowie eine zur Durchführung dieses Verfahrens vorgesehene Vorrichtung gemäß dem Oberbegriff des Anspruchs 9.

Im Rahmen der Abfallentsorgung ist es erforderlich, den gesamten Inhalt derartiger Öl- oder Benzinabscheider in regelmäßigen Zeitabständen vollständig zu entleeren, den Zustand des Abscheiders zu untersuchen und anschließend den Abscheider wieder in einen betriebsbereiten Zustand zu versetzen. Hierzu ist es notwendig, den Abscheider wieder mit Frischwasser aufzufüllen.

Die in den Abscheidern vorhandenen Flüssigkeiten können ohne vorherige Behandlung nicht zur Wiederauffüllung verwendet werden, da sie flüchtige Kohlenwasserstoffe enthalten. Je nach Größe des Abscheiders sind daher einerseits entsprechende Mengen von Abfällen aufzunehmen und zu einer Entsorgungsstelle zu transportieren, während andererseits Trinkwasser als Ölsperre im Abscheider eingesetzt wird. Dies ist jedoch weder wirtschaftlich noch ökologisch sinnvoll.

Typische Betreiber von Abscheidern der zur Rede stehenden Art, sog. Leichtflüssigkeits-Abscheide-Einrichtungen, sind Tankstellen, Tanklager, Fahrzeugwerkstätten, Flughäfen und Fahrzeugwaschanlagen.

Aus Gründen des Umweltschutzes dürfen Abwässer dieser Betreiber ausschließlich nach vorheriger Behandlung durch einen Abscheider in das Entwässerungssystem des Betriebes eingeleitet werden. Da derartige Abscheider selbsttätig arbeiten, gilt der regelmäßigen Entsorgung der im Abscheider aufgefangenen Rückstände und der technischen Wartung höchste Aufmerksamkeit des Betreibers, da bei Funktionsversagen Umweltschäden drohen.

Erfahrungsgemäß besteht der Inhalt eines regelmäßig gewarteten Abscheiders zu 80 % aus Schmutzwasser, das gemäß konventionellen Verfahren zu hohen Kosten gemeinsam mit dem Schlamm entsorgt wird.

Bei einer bekannten Einrichtung zum Entsorgen des Inhalts von Abscheidern (DE 90 14 300 U1) ist ein Tank mit einer Schlammkammer und einer Schmutzwasserkammer vorgesehen, die voneinander durch einen im Tank verschiebbaren Kolben getrennt sind. Hierbei wird der gesamte Inhalt des Abscheiders zuerst in die Schlammkammer gefördert. Diese dann in der Schlammkammer befindliche Flüssigkeit wird mittels einer Pumpe über ein zum Abtrennen des Schmutzanteils dienendes Rotationsfilter sowie über einen Ölabscheider, der vorhandenes Öl abtrennt und in eine Ölkammer leitet, in die Schmutzwasserkammer geführt. Dies bedeutet, daß das im Abscheider vorhandene Material insgesamt der Schlammkammer zugeführt wird, und zwar ohne Rücksicht darauf, ob es sich um Oberflächenöl, ölhaltiges Schmutzwasser oder am Boden abgesetzten Schlamm handelt Hierdurch kann die der Schlammkammer entnommene Flüssigkeit im Ölabscheider nur ungenügend in Öl und Schmutzwasser getrennt werden. Aus diesem Grund ist eine nochmalige Trennung des erhaltenen Schmutzwassers erforderlich. Gleichwohl bleibt das Schmutzwasser stark belastet und ist nicht zum Wiederauffüllen des Abscheiders geeignet; es muß statt dessen entsorgt werden.

Um diese Nachteile zu vermeiden, ist bei einer weiteren bekannten Einrichtung (DE 43 28 196 C2) ein Fahrzeug mit einem Tank vorgesehen, der gleichfalls durch einen verschiebbaren Kolben in eine Schmutzwasserkammer sowie in eine Kammer zur kombinierten Aufnahme von Öl und Schlamm unterteilt ist. In der Schmutzwasserkammer wird sowohl mittels mechanischer Mittel in Form eines Rührwerks als auch mittels chemischer Mittel in Form von Säure, Lauge und dergl. versucht, den hierin enthaltenen Schmutzanteil vom Wasser abzutrennen, um dadurch zu erreichen, daß das gereinigte Wasser als Brauchwasser wieder dem Abscheider zugeführt werden kann.

Abgesehen davon, daß die Behandlung des Schmutzwassers in der Schmutzwasserkammer wegen der verwendeten Rühreinrichtungen aufwendig sowie wegen der verwendeten chemischen Mittel in Form von Säure und Lauge nicht ungefährlich und auch nicht umweltschonend ist, ist ein weiterer Nachteil dadurch gegeben, daß eine wesentliche Arbeit des Abscheiders, die in der Trennung der verschiedenen Medien zu sehen ist, dadurch zunichte gemacht wird, daß sowohl das Oberflächenöl als auch der Bodenschlamm des Abscheiders gemeinsam in der neben der Schmutzwasserkammer angeordneten Kammer aufgenommen werden. Dies bedeutet einen erhöhten Entsorgungsaufwand, da die in dieser Kombinationskammer enthaltenen, wiederum vermischten Medien später erneut getrennt werden müssen, bevor sie vorschriftsmäßig entsorgt werden können.

Schließlich ist eine mobile Entsorgungsanlage bekannt (DE 197 33 449 A), bei der die verschiedenen Phasen aus Ölabscheidern zwar getrennt entnommen werden, bei der jedoch die Wasserphase in eine solche Schmutzwasserkammer eingeleitet wird, die ein mechanisches Rührwerk enthält. Diese bekannte Vorrichtung weist neben einer Ölkammer und einer Sedimentationsschlammkammer einen Tank mit verschiebbarem Kolben auf, der diesen Tank in eine Schmutzwasserkammer und in eine Feststoffkammer unterteilt. Aufgrund dieser Ausbildung soll es möglich sein, mehrmals die Schmutzwasserkammer mit Schmutzwasser unterschiedlicher Abscheideanlagen nacheinander zu beschicken, ohne daß sich ein Vermischen verschiedener Schmutzwässer aus unterschiedlichen Abscheidern ergibt und ohne daß das mehrmalige Anfahren verschiedener Anlagen erforderlich ist.

Durch das bei der bekannten Vorrichtung zwangsweise zur Anwendung gelangende mechanische Rührwerk ergeben sich jedoch gravierende Nachteile. So werden aufgrund des hierdurch erzeugten mechanischen Rührvorgangs regelmäßig die im Schmutzwasser enthaltenen Flocken, die mittels des zugegebenen Spalt- und Flockungsmittels gebildet werden, zerschlagen. Dies verhindert ein zufriedenstellendes Reinigungsergebnis.

Hinzu kommt außerdem, daß ein mechanisches Rührwerk bei höherem Ölanteil im Schmutzwasser eine Emulsion erzeugt, die danach eine mobile Wasserreinigung unmöglich macht.

Schließlich hat sich auch gezeigt, daß kleinere Abscheideanlagen mit den bekannten mechanischen Rührwerken nicht zu reinigen sind, da das betreffende mechanische Rührwerk, um überhaupt arbeiten zu können, eine nicht unerhebliche Wassermenge, üblicherweise mehr als 2,5 m^{3,} benötigt. Es wird somit bei der bekannten Vorrichtung, um das mechanische Rührwerk überhaupt einsetzen zu können, häufig die Vermischung verschiedener Schmutzwässer aus verschiedenen Abscheidern oder das mehrmalige Anfahren von verschiedenen Anlagen notwendig.

Der Erfindung liegt daher die Aufgabe zugrunde, eine kostengünstigere Reinigung und Entsorgung der Öl- oder Benzinabscheider zu schaffen.

Diese Aufgabe wird mit dem erfindungsgemäßen Verfahren durch die Merkmale des Anspruchs 1 und mit der erfindungsgemäßen Vorrichtung durch die Merkmale des Anspruchs 9 gelöst. Vorteilhafte Ausgestaltungen hiervon sind in den jeweiligen Unteransprüchen enthalten.

Bei dem erfindungsgemäßen Verfahren ist von besonderer Bedeutung, daß in der als Behandlungskammer dienenden Schmutzwasserkammer das dort enthaltene Schmutzwasser ausschließlich mittels eines zugegebenen Flockungsmittels ohne Verwendung sonstiger chemischer oder mechanischer Mittel während einer vorbestimmten Zeitdauer solange behandelt wird, bis das gereinigte Wasser pH-Wert-neutral sowie frei von groben Schwebstoffen oder physikalischen Verunreinigungen ist und/oder bis sein Anteil an Kohlenwasserstoffen <20 mg/l ist, worauf es sodann als aufbereitetes Brauchwasser zum Abscheider zurückgeführt wird.

Erfindungsgemäß ist es sehr von Vorteil, wenn die Wirkung des Flockungsmittels in der Schmutzwasserkammer mittels einer Besprudelungsanlage unterstützt wird. Hierdurch ergibt sich ein guter Mischungseffekt, so daß dadurch gewährleistet ist, daß die im Wasser enthaltenen Verunreinigungen relativ schnell ausgefällt werden. Hierbei hat sich gezeigt, daß die betreffende Behandlungsdauer den Zeitraum von etwa einer halben Stunde nicht überschreitet, was von besonderer Bedeutung für eine schnelle Durchführung der Gesamtreinigung ist.

Das Flockungsmittel kann entweder in Pulverform oder aber vorzugsweise in abgepackter portionierter Form zugegeben werden.

Ein bevorzugt eingesetztes Flockungsmittel ist ein polymeres Flockungsmittel, wobei gemäß einer erfindungsgemäßen Anwendung als Flockungsmittel ein solches auf Basis modifizierter Spalt-Adsorptions-Ionentausch-Reaktionsmittel eingesetzt werden kann.

In weiterer Ausgestaltung der Erfindung wird das Schmutzwasser in der Schmutzwasserkammer ohne vorherige Ermittlung seines pH-Wertes der chemischen Behandlung durch das Flockungsmittel unterzogen, das die Wasserverunreinigungen durch Ausfällen bindet.

Hierbei hat es sich als besonders vorteilhaft erwiesen, dem Schmutzwasser in der Schmutzwasserkammer eine vordosierte Menge des Flockungsmittels zuzugeben, die in optimierter Form auf die Menge des in der Schmutzwasserkammer vorhandenen Schmutzwassers, unabhängig von dessen Verschmutzungsgrad, bezogen ist.

Die zur Durchführung des beschriebenen Verfahrens vorgesehene Vorrichtung gemäß der Erfindung zeichnet sich durch zwei spezielle Merkmale aus, nämlich dahingehend
- daß die als Behandlungskammer ausgebildete Schmutzwasserkammer mit einer Einrichtung zur Messung der Menge des hierin enthaltenen Schmutzwassers, beisp. in Form einer Wasserstandsanzeige, versehen ist, um in Abhängigkeit von der Menge des in die Schmutzwasserkammer eingeleiteten Schmutzwassers dementsprechend viel vordosiertes Flockungsmittel, insbesondere in vorab gepackter portionierter Form, zuzugeben,und
- daß die Schmutzwasserkammer eine Besprudelungsanlage zur Durchmischung des Flockungsmittels mit dem Schmutzwasser, ohne die gebildeten Flocken mechanisch zu zerschlagen, aufweist.

Dadurch, daß die Schmutzwasserkammer die Besprudelungsanlage aufweist, ergeben sich bei der Zugabe des Flockungsmittels auf schonende Weise gute Effekte.

Vorzugsweise ist die Schmutzwasserkammer die größte der drei Kammern des Tankfahrzeuges.

Insgesamt besteht daher eine wesentliche Idee der Erfindung darin, die üblicherweise in einem Abscheider vorhandenen drei Medien, nämlich Öl, Schmutzwasser und Schlamm, die der Abscheider bereits getrennt hat, separat aufzusaugen und in gesonderte Kammern der als Fahrzeug ausgebildeten mobilen Reinigungsvorrichtung zu verbringen, wobei die im Abscheider bereits getrennten Medien nachträglich nicht mehr gemischt werden, da sie unterschiedlichen Behandlungen zugeführt werden. Das aus dem Abscheider aufgenommene Öl sowie der aufgesaugte Bodenschlamm bilden jeweils etwa ein Drittel des Gesamtvolumens. Diese beiden Medien werden, wie erwähnt, einer getrennten Entsorgung zugeführt.

Einer besonderen Behandlung bedarf das belastete Schmutzwasser. Dieses wird zum Zweck seiner Reinigung in die gesonderte Schmutzwasserkammer verbracht, die üblicherweise als größte Kammer des Tankfahrzeuges ausgebildet ist. In dieser Kammer wird das Schmutzwasser ausschließlich unter Verwendung eines speziellen Flockungsmittels, vorzugsweise in Form eines pulverförmigen polymeren Flockungsmittels, gereinigt. Der wesentliche Unterschied zu den bekannten Verfahren besteht darin, daß diese Reinigung nicht mechanisch erfolgt und daß auch weder Säure noch Lauge verwendet werden. Dieses Reinigungsverfahren ist somit außerordentlich umweltschonend und sicher, da keine gesundheitsgefährdenden Stoffe verwendet werden und keine zusätzliche Belastung des zu reinigenden Wassers erfolgt.

Das verwendete Flockungsmittel ist einsetzbar im Bereich aller pH-Werte, die sich in einem ordnungsgemäß verwendeten Abscheider ergeben können. Die gesamte Aufbereitung wird durch eine automatische Steuerung überwacht und weitgehend automatisiert durchgeführt. Diese zeichnet die einzelnen Vorgänge auf und gibt erst nach Erreichen der amtlich vorgegebenen Parameter ein Einlaßventil zur Befüllung des Abscheiders mit dem gereinigten Wasser, d.h. dem Brauchwasser, frei. Dadurch wird verhindert, daß belastetes Wasser in den Abscheider zurückgeleitet werden kann.

Durch das Verfahren und die Vorrichtung gemäß der Erfindung ist es somit möglich, schonend aufbereitetes Brauchwasser als Ölsperre in den Abscheider zurückzuführen. Hierdurch wird die Verwendung von kostbarem Trinkwasser zur Befüllung des Abscheiders eingespart.

Die wesentliche Bedeutung der Erfindung liegt darin, daß nach Aufnahme der Ölschicht aus dem Abscheider das verunreinigte Wasser in eine, vorzugsweise größenvariable, Schmutzwaserkammer übernommen und dort ausschließlich durch ein spezielles Flockungsmittel, d.h. ohne sonstige chemische Mittel und ohne sonstige mechanische Mittel, wie Filter oder Rührwerke u. dgl., gereinigt wird. Der Verzicht auf ein mechanisches Rührwerk ist von entscheidender Bedeutung für den Erfolg des erfindungsgemäßen Verfahrens, da ein mechanischer Rührvorgang die zur erfindungsgemäßen Wasserreinigung erforderlichen Flocken, die durch das Flockungsmittel gebildet werden, zerschlagen würde.

Ein weiteres wesentliches Merkmal des erfindungsgemäßen Verfahrens besteht darin, daß dieses für den Reinigungsprozess des Schmutzwassers keine vorherige pH-Wert-Messung mehr benötigt. Eine möglicherweise dennoch vorhandene pH-Wert-Sonde dient lediglich der Dokumentation für Behörden oder Kunden. Dies bedeutet, daß das verwendete Flockungsmittel auf das zu reinigende Schmutzwasser derart abgestimmt ist, daß stets eine gleiche, vorab dosierte Menge des Flockungsmittels, bezogen auf die Menge des zu reinigenden Schmutzwassers, benötigt wird. Hierdurch wird die Sicherheit des erfindungsgemäßen Verfahrens gegenüber den bisher bekannten Verfahren deutlich erhöht, da keine Dosiereinrichtung für das Flockungsmittel mehr erforderlich ist und da es auch nicht mehr notwendig ist, unterschiedlich große Mengen des Flockungsmittels in Abhängigkeit von einem zu messenden ph-Wert zuzuführen.

In praktischer Durchführung des erfindungsgemäßen Verfahrens kann bei der hierfür vorgesehenen Vorrichtung eine Wasserstandsanzeige in bzw. an der Schmutzwasserkammer vorgesehen sein. Hierdurch läßt sich die jeweils in der Behandlungskammer vorhandene Schmutzwasserrnenge leicht messen und dementsprechend viel vordosiertes Flockungsmittel, beispielsweise in vorab gepackter portionierter Form, zugeben.

Durch die Verwendung eines auf die Menge des zu reinigenden Schmutzwassers bezogenen vorportionierten Flockungsmittels ergibt sich außerdem der Vorteil, daß die Reinigung des Schmutzwassers nach einer vorbestimmten Zeitdauer, beispielsweise nach ca. 30 Minuten, beendet ist, so daß sich eine große Zeitersparnis für die Gesamtreinigung ergibt.

Die Ausgestaltung des erfindungsgemäßen Verfahrens sowie die zur Durchführung dieses Verfahrens vorgesehene Vorrichtung gemäß der Erfindung ermöglichen es außerdem, die Reinigung des Schmutzwassers in derjenigen Zeit durchzuführen, während das Fahrzeug seinen Standort wechselt. Dies ist mit den bisher bekannten Verfahren bzw. Vorrichtungen aufgrund der dort verwendeten Rührwerke usw. nicht möglich.

Das durch das erfindungsgemäße Verfahren erzeugte Brauchwasser ist derart rein, daß es auch in anderen Bereichen die Verwendung von hochwertigem Trinkwasser ersetzen kann.

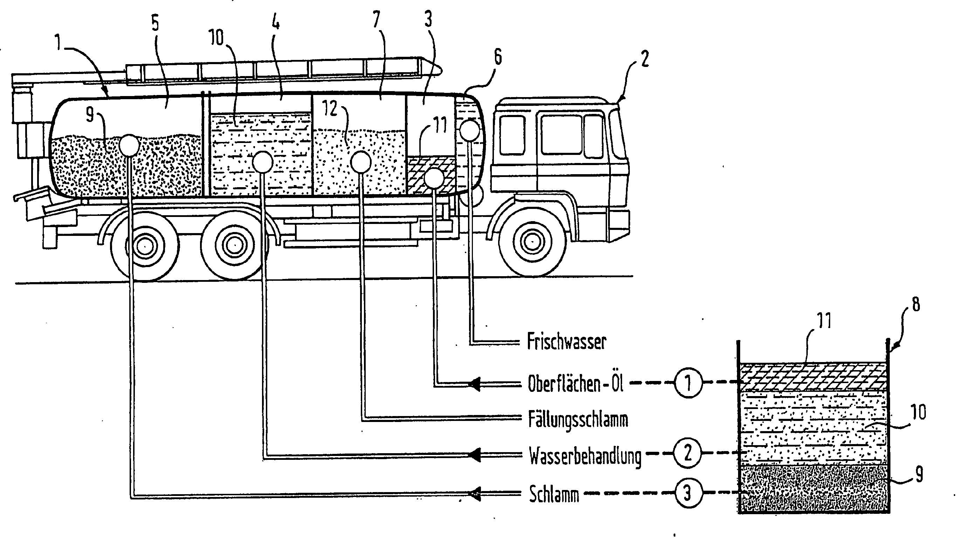

Die Erfindung wird im folgenden in Form eines Ausführungsbeispiels anhand der Zeichnung erläutert. Diese zeigt in der einzigen Figur eine schematisch dargestellte Vorrichtung zur Abscheider-Reinigung sowie zur Entsorgung der hierin aufgefangenen Medien.

Wie aus der Zeichnung ersichtlich, umfaßt die dargestellte Vorrichtung einen Mehrkammertank 1, der in weitgehend horizontaler Lage auf einem selbstfahrenden Tankfahrzeug 2 angeordnet ist.

Der Mehrkammertank 1 weist wenigstens drei einzelne gesonderte Kammern auf, und zwar eine Ölkammer 3, eine Schmutzwasserkammer 4 und eine Schlammkammer 5. Beim dargestellten Ausführungsbeispiel sind außerdem eine weitere Kammer 6 zur Aufnahme von Frischwasser sowie eine Kammer 7 zur Aufnahme von Fällungsschlamm nach erfolgter Ausflockung vorgesehen.

Wie schematisch in der Zeichnung dargestellt, sind in einem zu reinigenden Abscheider 8 die betreffenden aufgefangenen Medien derart getrennt, d.h. voneinander abgesetzt, daß sich am Boden des Abscheiders Schlamm 9 abgesetzt hat. Über diesem Schlamm 9 befindet sich Schmutzwasser 10, d.h. verunreinigtes Wasser, das Kohlenwasserstoffanteile enthält und als Ölsperre für auf dem Schmutzwasser 10 aufschwimmendes Oberflächenöl 11 dient.

Diese drei wesentlichen Medien 9, 10, 11 des Abscheiders 8 werden nun über entsprechende, nicht näher dargestellte Leitungen gesondert und ohne Vermischung in die einzelnen Kammern 3, 4, 5 des Tankfahrzeuges 2 verbracht, und zwar, wie schon beschrieben, in der Vorgehensweise von oben nach unten. Dies bedeutet; daß zuerst die auf der Oberfläche des Schmutzwassers 10 im Abscheider 8 aufschwimmende Leichtschicht in Form des Oberflächenöls 11 in die Ölkammer 3 des Tankfahrzeuges 2 abgesaugt wird. Darauf wird das Schmutzwasser 10 aus dem Abscheider 8 in die Schmutzwasserkammer 4 abgesaugt, worauf schließlich der am Boden des Abscheiders 8 befindliche Schlamm 9 in die Schlammkammer 5 des Tankfahrzeuges 2 verbracht wird.

Die Schmutzwasserkammer 4 des Tankfahrzeuges 2 dient als Behandlungskammer, in welcher dem Schmutzwasser 10 ein spezielles Flockungsmittel, vorzugsweise polymeres Flockungsmittel in vorportionierter Form, zugegeben wird. Der auf diese Weise abgetrennte Fällungsschlamm 12 wird in die Fällungsschlammkammer 7 verbracht bzw. dort zum Zweck der späteren Entsorgung aufbewahrt.

## Patentansprüche

1. Verfahren zur Reinigung von Öl- oder Benzinabscheidern sowie zur Entsorgung der hierin aufgefangenen Medien, wie Schlamm, Öl, Schmutzwasser und dgl., wobei diese Medien aus einem Abscheider in einen Mehrkammertank (1) eines Fahrzeuges (2) gepumpt, dort ggf. behandelt und sodann einer getrennten Entsorgung zugeführt werden,
**dadurch gekennzeichnet,**
- **daß** die im Abscheider (8) vorhandenen, bereits getrennten Medien (9, 10, 11) gesondert und ohne Vermischung in einzelne Kammern (3, 4, 5) des Fahrzeuges (2) abgesaugt werden,
- **daß** die gesonderte Absaugung der Medien (9, 10, 11) von oben nach unten aus dem Abscheider (8) erfolgt, so daß die hierin enthaltenen drei wesentlichen Fraktionen nacheinander nach ihren Phasen aufschwimmende Leichtschicht (Oberflächenöl (11)), verunreinigtes Wasser mit Kohlenwasserstoffanteilen (Schmutzwasser (10)) und Bodenschlamm (9) getrennt in die einzelnen Kammern (3, 4, 5) des Fahrzeuges (2), d.h. in eine Ölkammer (3), eine Schmutzwasserkammer (4) und eine Schlammkammer (5), übernommen werden, und
- **daß** in der als Behandlungskammer dienenden Schmutzwasserkammer (4) das dort enthaltene Schmutzwasser (10) ausschließlich mittels eines zugegebenen Flockungsmittels ohne Verwendung sonstiger chemischer oder mechanischer Mittel während einer vorbestimmten Zeitdauer solange behandelt wird, bis das gereinigte Wasser pH-Wert-neutral sowie frei von groben Schwebstoffen oder physikalischen Verunreinigungen ist und/oder bis sein Anteil an Kohlenwasserstoffen < 20 mg/l ist, worauf es sodann als aufbereitetes Brauchwasser zum Abscheider (8) zurückgeführt wird.

2. Verfahren nach Anspruch 1, **dadurch gekennzeichnet, daß** die Wirkung des Flockungsmittels in der Schmutzwasserkammer (4) mittels einer Besprudelungsanlage unterstützt wird.

3. Verfahren nach Anspruch 1 oder 2, **dadurch gekennzeichnet, daß** das Flockungsmittel in Pulverform zugegeben wird.

4. Verfahren nach einem der vorhergehenden Ansprüche, **dadurch gekennzeichnet, daß** das Flockungsmittel in abgepackter portionierter Form zugegeben wird.

5. Verfahren nach einem der vorhergehenden Ansprüche, **dadurch gekennzeichnet, daß** als Flockungsmittel ein polymeres Flockungsmittel verwendet wird.

6. Verfahren nach einem der vorhergehenden Ansprüche, **dadurch gekennzeichnet, daß** als Flockungsmittel ein solches auf Basis modifizierter Spalt-Adsorptions-lonentausch-Reaktionsmittel eingesetzt wird.

7. Verfahren nach einem der vorhergehenden Ansprüche, **dadurch gekennzeichnet, daß** das Schmutzwasser (10) in der Schmutzwasserkammer (4) ohne vorherige Ermittlung seines pH-Wertes der chemischen Behandlung durch das Flockungsmittel unterzogen wird, das die Wasserverunreinigungen durch Ausfällen bindet.

8. Verfahren nach einem der vorhergehenden Ansprüche, **dadurch gekennzeichnet, daß** dem Schmutzwasser (10) in der Schmutzwasserkammer (4) eine vordosierte Menge des Flockungsmittels zugegeben wird, die in optimierter Form auf die Menge des in der Schmutzwasserkammer (4) vorhandenen Schmutzwassers (10), unabhängig von dessen Verschmutzungsgrad, bezogen ist.

9. Vorrichtung zur Durchführung des Verfahrens nach einem der vorhergehenden Ansprüche, mit mehreren auf einem Fahrzeug (2) weitgehend horizontal hintereinander angeordneten Kammern (3, 4, 5) zur Aufnahme der in einem Öl-oder Benzinabscheider (8) getrennten Medien (9, 10, 11), wobei
- das Fahrzeug (2) wenigstens drei einzelne gesonderte Kammern in Form einer Ölkammer (3), einer Schlammkammer (5) und einer Schmutzwasserkammer (4) zur getrennten mischungsfreien Aufnahme der betreffenden Medien (9, 10, 11) aus dem Abscheider (8) sowie zur getrennten Entsorgung dieser Medien, insbesondere von Öl (11) und Schlamm (9), aufweist,
- die als Behandlungskammer ausgebildete Schmutzwasserkammer (4) mit einer Einrichtung zur Messung der Menge des hierin enthaltenen Schmutzwassers (10), beisp. in Form einer Wasserstandsanzeige, versehen ist, um dementsprechend viel vordosiertes Flockungsmittel, insbesondere in vorab gepackter portionierter Form, zuzugeben, und wobei
- die Schmutzwasserkammer (4) eine Besprudelungsanlage zur Durchmischung des Flockungsmittels mit dem Schmutzwasser (10), ohne die gebildeten Flocken mechanisch zu zerschlagen, aufweist.

10. Vorrichtung nach Anspruch 9, **dadurch gekennzeichnet, daß** die Schmutzwasserkammer (4) die größte der drei Kammern (3, 4, 5) ist.

## Claims

1. Method of cleaning oil or petrol separators and for disposing of the media captured therein, such as sludge, oil, dirty water and the like, said media being pumped out of a separator into a multi-compartmented tank (1) of a vehicle (2), being treated there if required and then being fed off to a separate means of disposal, **characterised in that**
- the media (9, 10, 11) present in the separator (8), which are already segregated from one another, are drawn off separately and without becoming mixed into individual compartments (3, 4, 5) in the vehicle (2),
- the drawing-off of the media (9, 10, 11) separately takes place from the separator (8) from the top downwards, so that the three principal fractions contained therein, namely the light layer which floats to the surface (surface oil (11)), polluted water containing hydrocarbon components (dirty water (10)) and bottom sludge (9), are transferred separately, in succession by their phases, into the individual compartments (3, 4, 5) in the vehicle (2), i.e. into an oil compartment (3), a dirty-water compartment (4) and a sludge compartment (5), and
- in the dirty-water compartment (4), which acts as a treatment compartment, the dirty water (10) contained therein is treated solely by means of an added flocculant, without the use of other chemical or mechanical means, for a preset period until such time as the cleaned water has a neutral pH and is free of coarse suspended matter or physical pollutants and/or the proportion of hydrocarbons contained therein is < 20 mg/l, whereupon it is then fed back to the separator (8) as recycled process water.

2. Method according to claim 1, **characterised in that** the action of the flocculant in the dirty-water compartment (4) is assisted by means of a bubble generating system.

3. Method according to claim 1 or 2, **characterised in that** the flocculant is added in powder form.

4. Method according to one of the foregoing claims, **characterised in that** the flocculant is added in the form of packed portions.

5. Method according to one of the foregoing claims, **characterised in that** a polymeric flocculant is used as a flocculant.

6. Method according to one of the foregoing claims, **characterised in that** a flocculant based on modified interstitial-adsorption ion exchange reactants is used as a flocculant.

7. Method according to one of the foregoing claims, **characterised in that** the dirty water (10) in the dirty-water compartment (4) is subjected to chemical treatment by the flocculant, which binds the pollutants in the water by precipitation, without its pH having first been determined.

8. Method according to one of the foregoing claims, **characterised in that** a pre-metered amount of the flocculant, which amount is related in an optimised form to the amount of dirty water (10) present in the dirty-water compartment (4) regardless of the degree of pollution of the dirty water (10), is added to the dirty water (10) in the dirty-water compartment (4).

9. Arrangement for performing the method according to one of the foregoing claims, having a plurality of compartments (3, 4, 5) for receiving the media (9, 10, 11) which are segregated in an oil or petrol separator (8), which compartments (3, 4, 5) are arranged one behind the other substantially horizontally on a vehicle (2), wherein
- the vehicle (2) has at least three separate, individual compartments in the form of an oil compartment (3), a sludge compartment (5) and a dirty-water compartment (4), for receiving the media concerned (9, 10, 11) from the separator (8) separately and without any mixing and for the separate disposal of said media, and in particular of oil (11) and sludge (9),
- the dirty-water compartment (4), which forms a treatment compartment, is provided with a means of measuring the amount of dirty water (10) contained therein, in for example the form of a water-level indicator, to enable a corresponding amount of pre-metered flocculant, particularly in the form of pre-packed portions, to be added, and wherein
- the dirty-water compartment (4) has a bubble generating system for mixing the flocculant thoroughly with the dirty water (10) without mechanically breaking up the floccules which form.

10. Arrangement according to claim 9, **characterised in that** the dirty-water compartment (4) is the largest of the three compartments (3, 4, 5).

## Revendications

1. Procédé de nettoyage de séparateurs d'huile ou d'essence ainsi que procédé d'élimination des substances collectées dans ceux-ci, telles que de la boue, de l'huile, de l'eau polluée et similaires, ces substances étant pompées hors d'un séparateur jusque dans un réservoir à plusieurs compartiments (1) d'un véhicule (2), éventuellement traitées dans celui-ci et amenées ensuite à une élimination séparée,
**caractérisé en ce que**
- les substances (9, 10, 11) se trouvant dans le séparateur (8) et déjà séparées sont triées et aspirées sans être mélangées dans des compartiments (3, 4, 5) individuels du véhicule (2),
- **en ce que** l'aspiration effectuée séparément des substances (9, 10, 11) a lieu de haut en bas hors du séparateur (8), de sorte que les trois fractions essentielles contenues dans celles-ci sont prises en charge les unes après les autres séparément selon leur phases, à savoir couche légère flottante (huile de surface (11)), eau polluée avec parts d'hydrocarbures (eau polluée (10)) et boue de fond (9) dans les compartiments (3, 4, 5) individuels du véhicule (2), c'est-à-dire dans un compartiment à huile (3), un compartiment à eau polluée (4) et un compartiment à boue (5), et
- **en ce que** dans le compartiment à eau polluée (4) servant de compartiment de traitement, l'eau polluée (10) contenue dans celui-ci est traitée exclusivement au moyen d'un agent floculant ajouté sans utiliser d'autres produits chimiques ou mécaniques pendant une durée prédéterminée jusqu'à ce que l'eau purifiée ait une valeur de pH neutre et exempte de matières grossières en suspension ou d'impuretés physiques et/ou jusqu'à ce que sa part d'hydrocarbures soit < 20 mg/l, à la suite de quoi elle est alors ramenée au séparateur (8) sous forme d'eau industrielle traitée.

2. Procédé selon la revendication 1, **caractérisé en ce que** l'effet de l'agent floculant dans le compartiment d'eau polluée est renforcé par une installation de tourbillonnement.

3. Procédé selon la revendication 1 ou 2, **caractérisé en ce que** l'agent floculant est ajouté sous forme de poudre.

4. Procédé selon l'une des revendications précédentes, **caractérisé en ce que** l'agent floculant est ajouté sous forme de portions emballées.

5. Procédé selon l'une des revendications précédentes, **caractérisé en ce qu'**on utilise à titre d'agent floculant un agent floculant polymère.

6. Procédé selon l'une des revendications précédentes, **caractérisé en ce qu'**on utilise à titre d'agent floculant un agent floculant à base d'agents réactifs d'échange ionique-adsorption-scission.

7. Procédé selon l'une des revendications précédentes, **caractérisé en ce qu'**on soumet l'eau polluée (10) dans le compartiment d'eau polluée (4), sans détermination préalable de sa valeur de pH, à un traitement chimique par l'agent floculant qui lie les impuretés de l'eau par précipitation.

8. Procédé selon l'une des revendications précédentes, **caractérisé en ce qu'**on ajoute à l'eau polluée (10) dans le compartiment d'eau polluée (4) une quantité préalablement dosée d'agent floculant qui est calculée sous forme optimisée à la quantité d'eau polluée (10) se trouvant dans le compartiment d'eau polluée (4), indépendamment de son degré de pollution.

9. Dispositif de mise en oeuvre du procédé selon l'une des revendications précédentes, comportant plusieurs compartiments (3, 4, 5) agencés sur un véhicule (2) en grande partie à l'horizontale les uns derrière les autres, destinés à recevoir les substances (9, 10, 11) séparées dans un séparateur d'huile ou d'essence (8), dans lequel
- le véhicule (2) présente au moins trois compartiments individuels séparés sous forme d'un compartiment à huile (3), d'un compartiment à boue (5) et d'un compartiment à eau polluée (4) pour recevoir les substances (9, 10, 11) concernées séparément et sans les mélanger, hors du séparateur (8) ainsi que pour éliminer séparément ces substances, en particulier l'huile (11) et la boue (9),
- le compartiment d'eau polluée (4) réalisé à titre de compartiment de traitement est pourvu d'un dispositif de mesure de la quantité de l'eau polluée (10) qui s'y trouve, par exemple sous forme d'un indicateur de niveau d'eau, pour ajouter une quantité correspondante d'agent floculant préalablement dosé, en particulier sous forme de portions préalablement emballées, et dans lequel
- le compartiment d'eau polluée (4) présente une installation de tourbillonnement pour mélanger à fond l'agent floculant à l'eau polluée (10) sans briser mécaniquement les flocons.

10. Dispositif selon la revendication 9, **caractérisé en ce que** le compartiment d'eau polluée (4) est le plus grand des trois compartiments (3, 4, 5).
